# EUROPEAN PATENT SPECIFICATION

(11) **EP 3 516 960 B1**
(45) Date of publication and mention of the grant of the patent: **11.11.2026**
(21) Application number: 19152644.1
(22) Date of filing: 18.01.2019
(51) Int. Cl.: A01N 25/04, A01N 59/16, A01P 1/00

(54) **COMPOSITION COMPRISING SILVER (AG+) ION CLUSTERS**
ZUSAMMENSETZUNG SILBERIONEN-CLUSTER ENTHALTEND
COMPOSÉ CONTENENTE CLUSTERS D'IONS D'ARGENT

(30) Priority: 30.01.2018 IT 201800002177
(43) Date of publication of application: 31.07.2019
(73) Proprietor: CLUSTERNANOTECH LTD, SW1X 7LY London (GB)
(72) Inventor: CANTARELLI, Bruno, 43036 FIDENZA (PR) (IT); CANTARELLI, Svetlana, 43036 FIDENZA (PR) (IT)
(74) Representative: Ing. C. Corradini & C. S.R.L.

(56) References cited:
- EP-A2- 1 644 010
- EP-B1- 1 644 010
- WO-A2-2006/034249
- CN-A- 104 542 706
- GB-A- 2 486 190

## Description

### TECHNICAL FIELD

The present invention relates to a method for the preparation of a composition comprising silver ion clusters (Ag+), stable when exposed to light and at room temperature, soluble in water, having antibacterial and antimycotic properties. Furthermore, the invention relates to the preparation of a supramolecular structure consisting of a composition comprising clusters of silver ions bound together with propylene glycol bridges. Such compositions comprising the clusters can be used as antimicrobial agents for producing formulations for treating or preventing bacterial and fungal infections.

### PRIOR ART

Biocides and antibiotics both of natural origin and completely or partially synthesized are known in the prior art. However, they have limited action spectra and their continuous use in the medical field has created resistant strains of bacteria, reducing the efficacy thereof. An example of a composition comprising silver ion is disclosed in document WO2006034249.

The object of the present invention is therefore that of finding an effective and preferable alternative in different situations to biocides and to antibiotics known in the art for treating or preventing bacterial and fungal infections, in the pharmaceutical, veterinary, agricultural, cosmetic, industrial and coating field in general.

### DISCLOSURE OF THE INVENTION

In a first aspect, the present invention relates to a method for the preparation of a composition comprising silver ion Ag+ clusters according to claim 1.

In fact, the present invention stems from the general consideration according to which the technical problem highlighted above can be solved effectively and reliably through a composition comprising silver ion Ag+ clusters, having an average particle size between 100 nm and 1,500 nm, soluble in water and bound together by weak interactions (weak interactions means, in particular, interactions with similar energy to that of hydrogen bonds or external sphere coordination) with the hydroxyl groups of propylene glycol and/or of other molecules or other polymers with polar groups that act as a bridge between two or more silver atoms,
wherein said composition further comprises hydrogen peroxide which, in an acid environment with pH values comprised between 2 and 5, prevents the reduction to metallic silver of the ionized silver present in the cluster.

In this way, the silver ion Ag+ clusters are stable when exposed to light and at room temperature, they are soluble in water, and create weak bonds with the hydroxyl groups indicated above forming complex dynamic macro-structures. The silver ion Ag⁺ clusters, bound to the polymers, have strong antimicrobial activity against all bacteria, Gram-positive and Gram-negative, preventing all types of drug-resistance. The difference between antibiotics depends on the drug resistance and invasiveness thereof.

Furthermore, the presence of hydrogen peroxide allows the silver ion Ag⁺ clusters in an oxidation state of +1 to be stabilized and to extend their shelf life.

Therefore, their use represents a solution of antibacterial capacity (such as, by way of non-limiting example, bacteria of the Enterococcus faecalis, Pseudomonas aeruginosa, Escherichia coli type, etc.) and antifungal capacity (such as, for example, a wide range of fungi including, but not limited to, Candida albicans) free from possible toxicity in the use of the metal, unlike metallic silver Ag⁰ particles.

In fact, the topical use of said silver ion Ag⁺ clusters directly on the infected surface, by exploiting the low migration capacity of the silver ions in tissues and the low toxicity to the derma, also lead to benefits in the case of other inflammatory diseases caused by bacterial infections. In fact, the cause of infection is removed, i.e. the presence and formation of bacterial colonies on the cutis and on the internal tissues (nose, ears, throat, anus, vagina, etc.), by using a relevant vehicle, such as cream, gel, ointment, aerosol, mixture of liquids.

For example, in the case of candidosis, the development of products based on silver ion Ag⁺ clusters against candida is a condition that has been treated with very positive developments.

In the present description and appended claims, the term "silver ion Ag⁺ clusters" indicates a set of Ag⁺ ions substantially bound with a polymer matrix and molecules with more than one hydroxyl group able to act as a bridge between two Ag⁺ ions.

In the present invention and appended claims, the term "polymer" indicates a synthetic macromolecule that comprises multiple repeated sub-units.

In the present description and appended claims, the term "polymer chain" indicates a polymer length comprising numerous sub-groups connected to each other in the form of a chain.

According to a preferred embodiment, said polymers with polar groups are selected from the group comprising polyvinylpyrrolidone (PVP), polyacrylates, silica gel, polyols.

According to a preferred embodiment, said silver ion Ag+ clusters further comprise isopropyl alcohol, ethyl alcohol, citric acid, hyaluronic acid, iodine and/or other molecules able to interact with silver with an order of energy similar to that of the Ag+ - propylene glycol interaction.

In this way, said silver ion Ag⁺ clusters are stabilized and the antibacterial, antimycotic and healing properties are also improved.

According to a preferred embodiment, said silver ion Ag+ clusters consist of various combinations and concentrations of propylene glycol, alcohols and said polymers with polar groups selected from the group comprising povidone-iodine, polyvinylpyrrolidone (PVP), polyacrylates, silica gel.

According to a preferred embodiment, said Ag⁺ ions are bound together as shown in formula (1):

X-Ag⁺-Y- [-Ag⁺ -Y-Ag⁺ -]ₙ -Y-Ag⁺ -X (1)

where X is a molecule of isopropyl alcohol, Y is propylene glycol and n is an integer that ranges from 1 to 20,000, preferably from 1,000 to 20,000, even more preferably from 5,000 to 20,000.

According to a preferred embodiment, said Ag⁺ ions are bound together as shown in formula (2):

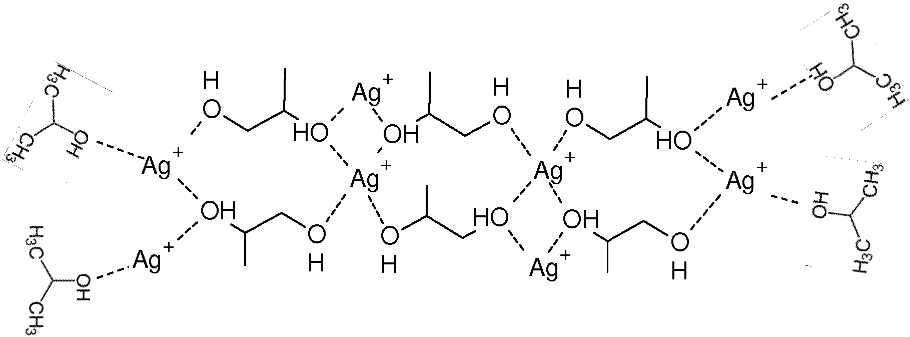

According to a preferred embodiment, said silver ion Ag+ clusters have dimensions of about 10 nanometres up to over a thousand nanometres, such as, for example up to 1500 nm, according to the synthesis conditions used.

It is thus possible to opt for the synthesis of nano-clusters (limit of nano particles, less than 100 nanometres) or non nano-particle clusters.

The possibility to create silver ion Ag⁺ clusters over 100 nanometres eliminates problems due to possible toxicity in the use of the metal.

In the pharmacopoeia, silver can be used in the form of metallic silver nanoparticle suspensions, for increasing the active surface area and therefore the efficacy/concentration ratio; or in ionic form, with valency +1, to maximize it.

In a second aspect, the present invention relates to a method, which will be called *Synthag,* for preparing a composition comprising silver ion Ag+ clusters according to claim 8.

In fact, the present invention stems from the general consideration according to which the technical problem highlighted above can be solved effectively and reliably through a method for preparing a composition comprising silver ion Ag+ clusters as described above with reference to the first aspect of the invention. In particular, said method comprises the steps of:
a) preparing AgNO3 in aqueous solution;
b) preparing propylene glycol and/or other polymers with polar groups to form chains of atoms and molecules that form the silver ion Ag+ clusters;
c) adding isopropyl alcohol, ethyl alcohol or other alcohols to stabilize the chain; and
d) adding hydrogen peroxide.

In this way, silver ion Ag⁺ clusters are obtained which are soluble in water, stable when exposed to light and at room temperature, bound together by bonds with the hydroxyl groups of propylene glycol and/or other polymers with polar groups that operate as a bridge between two or more silver atoms.

Furthermore, the silver ion Ag⁺ clusters prepared with such method have demonstrated excellent antibacterial and antimycotic action due to the greater availability of Ag⁺ ions.

According to a preferred embodiment, step a) of the method of the present invention is performed by filling a dropping funnel with a solution of AgNOs in double distilled water.

According to a preferred embodiment, said step a) is performed in a dark room.

According to a preferred embodiment, step b) of the method of the present invention is performed by filling a reactor with propylene glycol and/or other polymers with polar groups with ratios to the volume of the dropping funnel of 1/5 to 1/10.

According to a preferred embodiment, step b) of the method of the present invention is followed by a step b') of heating the propylene glycol and/or other polymers with polar groups before performing step c).

According to a preferred embodiment, said heating step b') is interrupted upon reaching a temperature of 75°C (+/- 5%) while stirring at 100/200 RPM according to the diameter of the reactor.

According to a preferred embodiment, said step c) is performed by adding isopropyl alcohol, ethyl alcohol or other alcohols to stabilize the chain in a variable percentage from 2% to 20%.

According to a preferred embodiment, step c) of the method of the present invention is followed by a step c') of heating to a temperature of 70°C (+/- 5%) before starting a dripping step c").

According to a preferred embodiment, at the end of the dripping step c"), the step d) of adding hydrogen peroxide is performed.

According to a preferred embodiment, said hydrogen peroxide is added in a percentage of 0.1% to 1%.

According to a preferred embodiment, at the end of step d) a new stirring step is performed, followed by the storage of the material thus obtained in a container that is open for 24 hours, protected from dust.

According to a preferred embodiment, the pH of the suspensions of Ag⁺ clusters is comprised between 2 and 5.

In this way, the stability of the Ag⁺ clusters is maintained over time, in order to guarantee a longer lifetime than 3 years, even if exposed to light.

The method for the preparation of a composition comprising silver ion Ag+ clusters of the present invention cannot use any of the known technologies, for example, those defined and known by the following terms mechanical/ball milling, chemical etching, thermal/laser ablation, sputtering, chemical/electrochemical precipitation, vapour deposition, atomic/molecular condensation, sol-gel process, spray pyrolysis, laser pyrolysis, aerosol pyrolysis, and the like. In fact, with the aforesaid methods, according to the technology used, silver nano-particles (also called AgNPs) can be obtained with different technical characteristics from one another and different from the clusters obtained in the present invention.

The product obtained with the preparation method in the present invention, unlike the methods listed above, is not photosensitive. Furthermore, the quality of the antimicrobial products to be placed on the market has been improved. The improvement relates to the ability of the material to be functional in many formulations for pharmacy, for the veterinary, agricultural, cosmetic, industrial and coating fields in general.

According to a preferred embodiment, in the method of the present invention, the concentrations of silver ions Ag⁺ during the preparation can vary from 1,000 ppm to 90,000 ppm.

In this way different degrees of concentrations of Ag⁺ ions can be obtained so as to ensure that the product obtained can be used in various industrial fields. According to a preferred embodiment, the concentration of silver ions Ag⁺ ranges from about 1,000 ppm to about 3,000 ppm.

In this way, the silver ion Ag⁺ clusters obtained with such low concentration levels (1,000/3,000 ppm of Ag⁺) can be used in the pharmaceutical and veterinary field. According to another preferred embodiment, the concentration of silver ions Ag⁺ ranges from about 5,000 ppm to about 90,000 ppm.

In this way, the silver ion Ag⁺ clusters obtained with such high concentration levels (5,000/90,000 ppm of Ag⁺) can be used in the agricultural field and for antimicrobial coatings.

According to a preferred embodiment, the size of the Ag⁺ clusters is determined by the dripping speed and/or the concentration of AgNOs in the dropping funnel.

According to a preferred embodiment, the size of the Ag⁺ clusters varies between 100nm and 1500nm, as determined through the Malvern optical instrument.

In this way, the preparation method determines the different sizes and therefore the degree of antimicrobial activity of the silver ion Ag⁺ clusters: the larger the Ag⁺cluster, the longer the duration of the antimicrobial activity. Vice versa, a small Ag⁺ cluster displays strong initial activity before reducing in a short time.

With this evidence, it is possible to use different methods for implementing the present invention to obtain products with different antimicrobial characteristics according to their intended use.

In a third aspect, the present invention relates to the use of a composition comprising silver ion Ag+ clusters according to claim 12.

In fact, the composition comprising silver ion Ag+ clusters, as described above with reference to the first aspect of the present invention, can be used for developing formulations for the prevention and/or cure of microbial, bacterial and/or mycotic infections.

According to a preferred embodiment, the use of a composition comprising clusters of silver ions as described above having a concentration from 1,000 to 3,000 ppm Ag+ is particularly indicated in the pharmaceutical and veterinary field. According to another preferred embodiment, the use of a composition comprising clusters of silver ions as described above having a concentration from 5,000 to 90,000 ppm Ag+ is particularly indicated in the agricultural and industrial fields and for antimicrobial coatings.

The present invention is illustrated below in more detail through a description of non-limiting examples of embodiments.

### BEST WAY TO ACTUATE THE INVENTION

Various types of compositions comprising clusters with silver ions Ag+ were synthesized using propylene glycol, isopropyl alcohol, PVP in different combinations and concentrations.

The syntheses performed have different concentrations of Ag⁺ in order to respond better to the different requirements of the fields of use: pharmaceuticals, veterinary products, industrial products, etc.

### Examples

### Example 1.

Preparation of 10 Kg of a composition comprising Ag+ clusters and propylene glycol.

Silver nitrate (920 g), propylene glycol (7800 g), isopropyl glycol (300 g), hydrogen peroxide (200 g) and double distilled water (780 g) were inserted into a standard 10L modified reactor (engineered by Clusternanotech Ltd, London, UK), in the following way.

The mixing of 920 g of AgN0₃ in 780 g of double distilled water took place in a dark room; then 200 g of propylene glycol were added.

Subsequently, 7600 g of propylene glycol were inserted into the reactor with the addition of 100 g of hydrogen peroxide. The mixture was brought to the temperature of 70°C for adding 300 g of isopropyl alcohol.

After reaching the temperature of 76°C (+/- 3%), the dripping began at a speed of 400ml/h with a speed of 140RPM inside the reactor. Once the dripping had finished, the remaining 200 g of hydrogen peroxide were added. It was left to cool before bottling.

### Example 2.

Preparation of 2 kg of a composition comprising Ag+ clusters, propylene glycol and isopropyl alcohol.

In the same way as for Example 1, the mixing of 125 g of AgN0₃ in 200 g of double distilled water took place in a dark room; then 160 g of propylene glycol were added.

Subsequently, 160 g of propylene glycol were inserted into the reactor with the addition of 20 g of hydrogen peroxide. The mixture was brought to the temperature of 70°C for adding 1,800 g of isopropyl alcohol.

After reaching the temperature of 76°C (+/- 3%), the dripping began at a speed of 300ml/h with a speed of 210RPM inside the reactor. Once the dripping had finished, another 30 g of hydrogen peroxide were added. It was left to cool before bottling.

### Example 3.

Preparation of 2 kg of a composition of Ag⁺ clusters, propylene glycol, isopropyl alcohol and PVP.

A first mixture of 200 g of PVP in 400 g of double distilled water was prepared.

A second mixture contained AgN0₃ with 260 g of double distilled water.

1640 g of double distilled water with the addition of 10 g of propylene glycol and 50 g of hydrogen peroxide were inserted into the reactor, in a dark room. This was brought to the temperature of 70°C before adding 35 g of isopropyl alcohol.

After reaching the temperature of 76°C (+/- 3%), the dripping began at a speed of 300ml/h with a speed of 210RPM inside the reactor. Once the dripping had finished, another 50 g of hydrogen peroxide were added. It was left to cool before bottling.

### Example 4.

Preparation of 10 Kg of a composition comprising Ag+ clusters and silica gel.

A first mixture (A) of AgN0₃ with 780 g of double distilled water was prepared.

A second mixture (B) contained 7,800 g of propylene glycol and 100 g of hydrogen peroxide. This was brought to the temperature of 70°C before adding 300 g of isopropyl alcohol.

After reaching the temperature of 76°C (+/- 3%), the dripping began at a speed of 300ml/h with a speed of 210RPM inside the reactor. Once the dripping had finished, another 100 g of hydrogen peroxide were added. The solution (A) was left to cool before nebulizing into the mixer.

Subsequently, the mixer was filled with 10 kg of micro silicon dioxide (3/30 µm). 10 litres of solution A were diluted in 30 litres of double distilled water (solution B).

40 litres of solution B were inserted into the vacuum mixer, through a nebulizer nozzle, at a speed of 200/500RPM and nebulization in 3 hours of work. The product was presented in the form of gel.

### Chemical/physical analyses

The compositions comprising silver ion clusters were characterized with chemical/physical investigations to determine the concentration of Ag, the stability, the size and the distribution thereof.

The concentration of Ag⁺ was performed through the ICP-AES (Inductively Coupled Plasma - Atomic Emission Spectroscopy) technique. The Ag⁺ concentration values of 8,600 ppm and 4,400 ppm could be found from two analyses.

Zeta Test: the zeta potential of some cluster samples stabilized with propylene glycol obtained as described in Example 1. The electrophoretic mobility of some samples stabilized with hydrogen peroxide was measured at 25 °C on the Malvern Zetasizer device (by Malvern Instruments, Malvern, UK) using M3-PALS technology. The zeta potential of the sample was calculated through the Smoluchowski equation using the Zetasizer software (Malvern Instruments) and is reported in the following table.

| Average (mV) | Area % | Standard Deviation (mV) | Conductivity mS/cm |
|---|---|---|---|
| - 17.7 | 100 | 4.44 | 0.892 |

Samples of compositions comprising silver ion clusters were analysed with Malvern Dynamic Light Scattering (DLS) instrumentation, determining the size and distribution thereof. They range from some tens of nm to over 1,000 nm according to the reaction conditions (concentration of reactants, temperature, presence of alcohols, and/or polymers or other molecules).

A statistical sample of the size of the particles was obtained through Malvern analysis, as for the population degree that saw a peak around 750 nm. The fact that the majority of Ag⁺ clusters is greater than 100 nm in length indicates a reduced risk of toxicity in mammals.

The suspensions in propylene glycol obtained in Examples 1-4 appeared clear, characteristic of small Ag⁺ clusters dispersed at high concentration. According to the synthetic conditions used, the final concentration of silver of the suspensions was between 3,000 and 90,000 ppm. This allows effective flexibility in relation to the volume and concentration of the suspension of Ag⁺ clusters that can be inserted into an antimicrobial product.

### Biocidal activity

To test the activity and the biological availability of the silver ions present in the structure of the clusters, various in vitro tests were performed on the Ag⁺ cluster described in Example 1 on different strains of bacteria, S. Aureus, E.Coli, E. Faecalis (see table 1) and Fusarium Oxysporum mould (see table 2). As can be seen from the data provided in tables 1 and 2 below, the presence of silver ion Ag⁺ clusters allowed substantially 100% of the reduction of bacterial activity and the presence of moulds to be obtained.

**Table 1 - reduction of bacteria in clusters of Ag⁺ and of propylene glycol**

| Bacteria | Quantity after 10 minutes | % reduction | Quantity after 60 minutes | % reduction |
|---|---|---|---|---|
| S. Aureus | 1.1x10⁶ | 81.97 | 0 | 100 |
| E.Coli | 7.0x10⁵ | 79.41 | 0 | 100 |
| E. Faecalis | 9.1x10⁵ | 84.04 | 0 | 100 |

**Table 2 - reduction in mould in clusters of Ag⁺ and of propylene glycol**

| Cluster | Mould | Number of colonies after 2 days | % reduction |
|---|---|---|---|
| No Ag⁺ | Fusarium Oxysporum | 408 | 0 |
| AGL 20ppm | Fusarium Oxysporum | 0 | >99% |
| AGL 60ppm | Fusarium Oxysporum | 0 | >99% |

Tests were also performed with solutions diluted at different concentrations of silver ions, measuring the reduction in microbial load at different times. Table 3 below shows that effective results were obtained already after 2 hours of treatment with clusters of silver ions Ag⁺.

**Table 3 - efficacy over time**

| Exposure time | 20ppm | 70ppm |
|---|---|---|
| 30 minutes | no efficacy | minimal efficacy |
| 1 hour | minimal efficacy | minimal efficacy |
| 2 hours | effective | effective |
| 6 hours | effective | effective |
| 9 hours | effective | effective |
| 24 hours | effective | effective |

Antibacterial tests were performed with silver ion Ag⁺ clusters containing different molecules.

Table 4 shows the results of the test related to two types of Ag+ samples containing silica gel at the concentrations of 5ppm and 10ppm. As can be noted, already an hour after treatment, a microbial reduction of over 90% was noted, which reached 100% after eight hours.

**Table 4 - reduction of bacteria in clusters of Ag⁺ and silica**

| Concentration of AG⁺ | Number of hours | Number of colonies | % microbial reduction |
|---|---|---|---|
| | 0 | 0.7 x 10⁶ | |
| 0 | 1 | 0.6 x 10⁶ | 0 |
| 5 ppm | 1 | 0.6 x 10⁵ | 91% |
| 10 ppm | 1 | 0.8 x 10¹ | 99% |
| 0 | 8 | 2.7 x 10⁶ | 0 |
| 5 ppm | 8 | 0 | >99% |
| 10 ppm | 8 | 0 | >99% |
| 0 | 24 | 3.6 x 10⁷ | 0 |
| 5 ppm | 24 | 0 | >99% |
| 10 ppm | 24 | 0 | >99% |

Table 5 shows the results of the tests related to a sample of Ag+ containing iodine in propylene glycol and citric acid on strains of the following bacteria: Staphyilococcus Aureus, Escherichia Coli, Enterococcus Fecalis, Candida Albicans and Lactobacillus Sakei. The results show strong antibacterial activity.

### Example 5.

For the preparation of 1 kg of composition comprising Ag+clusters, 200 grams of silver ion AGL clusters (3000ppm) premixed with hydrogen peroxide, as mentioned above, 20 grams of isopropyl alcohol, 12.5 grams of iodine in 217.5 grams of propylene glycol, 350 grams of butylene glycol and 100 grams of polyvinylpyrrolidone in 100 grams of water were used.

Procedure: the mixtures of water and polyvinylpyrrolidone and the iodine solution in glycol were prepared separately. Subsequently, the stabilizing mixture with the iodine solution, the PVP one, butylene glycol and isopropyl alcohol were prepared. Finally, the cluster of silver ions was added.

**Table 5 - reduction of bacteria in clusters of Ag+ with iodine in glycol (on sample MC QR).**

| Microorganisms | Starting situation (CFU/cm²) | T1 1min Log T1 Reduction Log | % microbial reduction | T2 15min | % microbial reduction |
|---|---|---|---|---|---|
| S. Aureus | 3.7 x 10⁶ | <10 | 100% | <10 | 100% |
| | Log = 6.57 | <1 | | <1 | |
| | | >5 | | >5 | |
| E. Coli | 1.3 x 10⁶ | <10 | 100% | <10 | 100% |
| | Log = 6.11 | <1 | | <1 | |
| | | >5 | | >5 | |
| E. fecalis | 3.8 x 10⁶ | <10 | 100% | <10 | 100% |
| | Log = 6.58 | <1 | | <1 | |
| | | >5 | | >5 | |
| C. Albicans | 5.5 x 10⁶ | <10 | 100% | <10 | 100% |
| | Log = 6.74 | <1 | | <1 | |
| | | >5 | | >5 | |
| L.Sakei | 3.9 x 10⁶ | 2.5 x 10¹ | 99.9% | <10 | 100% |
| | Log = 6.59 | 1.40 | | <1 | |
| | | 05:19 | | >5 | |

From such tables it can be deduced that the invention provides the opportunity to produce products for treating and/or preventing microbial/fungal infections providing an excellent alternative or complementary solution to antibiotics. In fact, a notable bacterial load is obtained in a very short time.

### Example 5.

A group of adult patients who suffered from burns of various aetiology and localization (scalding from hot water, burns from flames, sun stroke), with percentages that varied from 1% to 5% of the surface area of the body and burn degree classified from 1 to 3, were subjected to treatment with various ointments. In particular, the patients were split into groups of 6-8 people and subjected to treatment with the following ointments:
Comparison 1: brand name "Levomekol", available from JSC NizhPharm - Russia. The 100 g composition is in the form of ointment for external use and includes the active ingredients methylacyl - 4 mg and chloramphenicol - 0.75 mg, with polyethylene oxide 1500 and polyethylene oxide 400, as auxiliary components up to 100 g.
Comparison 2: brand name "Oflomelid", in the form of an ointment for external use. The 1 g composition includes the active ingredients methyluracil - 40 mg, ofloxacin 10 mg, and lidocaine hydrochloride - 30 mg, with macrogol 400 (low molecular weight polyethylene glycol 400, polyethylene 400), macrogol 1500 (low molecular weight polyethylene glycol 1500 polyethylene 1500), methyl parahydroxybenzoate (methylparaben or Nipagin), propylene glycol, propyl parahydroxybenzoate (Nipasol or propylparaben), as auxiliary components up to 100 g.
Comparison 3: brand name "Sulfargin", in the form of an ointment for external use. The 50 g composition includes the active ingredient silver sulfadiazine.

Invention 1: cluster of silver iodate as described in Example 2 described above. Table 6 below shows the results obtained.

**Table 6**

| Symptom | Patients treated with Comparison 1 | Patients treated with Comparison 2 | Patients treated with Comparison 3 | Patients treated with Invention 1 |
|---|---|---|---|---|
| Disappearance of perifocal inflammation phenomena | 4-5 days | 3-5 days | 4-5 days | 2-4 days |
| Disappearance of detachment from the burned surface | 9-11 days | 7-10 days | 10-11 days | 6-8 days |
| Healing with creation of the necrotic scab | about 20% | about 50% | about 60% | about 85% |
| Presence of propensity to form scars in the healed area | about 8-9% | about 8% | about 10% | not found |

From the data reported in Table 6 it can be deduced that the compound of the invention has an immediate positive effect on the dynamics of the healing process of wounds, which has an effect on the time scales for the healing of wounds, without any defect on the new skin and no propensity to form scars.

Vice versa, patients subjected to ointments known in the state of the art do not have the same results obtained with the composition of the invention.

Therefore, the scope of protection of the present invention must not be limited to the embodiments described solely by way of example, but must be considered based on the claims appended hereto.

## Claims

1. Method for the preparation of a composition having a pH comprised between 2 and 5, comprising:
silver ion Ag⁺ clusters, having an average particle size between 100 nm and 1,500 nm, wherein the silver ion Ag⁺ clusters are soluble in water and comprise:
∘ silver ions in oxidation state (I) and
∘ propylene glycol and/or polymers with polar groups, selected in the group consisting of polyvinylpyrrolidone (PVP), polyacrylates, silica gel and polyols,
and wherein the hydroxyl groups of the propylene glycol and/or the polar groups of the polymers act as a bridge between two or more silver ion Ag⁺ and are bound together by weak interactions with binding energy similar to the binding energy of hydrogen bonds;
**wherein** said composition further comprises:
∘ hydrogen peroxide; and
∘ isopropyl alcohol, ethyl alcohol, citric acid, hyaluronic acid and/or iodine;
**and in that**
the concentration of silver ion Ag⁺ clusters is from 1,000 to 3,000 ppm or from 5,000 to 90,000 ppm;
wherein the method is comprising the steps of:
a. preparing AgNO₃ in aqueous solution by filling a dropping funnel with a solution of AgNO₃ in double distilled water, wherein the preparation of AgNO₃ in aqueous solution is performed in a darkroom;
b. preparing propylene glycol and/or other polymers with polar groups, selected in the group consisting of polyvinylpyrrolidone (PVP), polyacrylates, silica gel and polyols, to form chains of atoms and molecules that form the silver ion Ag⁺ cluster;
c. adding isopropyl alcohol, ethyl alcohol, citric acid, hyaluronic acid and/or iodine to stabilize the chain;
d. adding hydrogen peroxide.

2. Method according to claim 1, wherein step b) is followed by a step of:
b') heating the propylene glycol and/or the other polymers with polar groups before carrying out step c), wherein said heating step b') is interrupted when a temperature of 75°C is reached (+/- 5%) during stirring of 100/200 RPM depending on the diameter of the reactor.

3. Method according to claim 1, wherein said step c) is followed by a heating step c') to a temperature of 70°C (+/- 5%) before starting a dripping step c").

4. Method according to claim 1, wherein said isopropyl alcohol, ethyl alcohol, citric acid, hyaluronic acid and/or iodine is added in a percentage from 2% to 20%.

5. Method according to claim 1, wherein said hydrogen peroxide is added in a percentage of 0.1% to 1%..

6. Method according to claim 1, wherein the silver ions Ag⁺ are bound together as shown in formula (1):
X-Ag⁺-[-Y -Ag⁺ -Y]ₙ -Ag⁺ -X (1)
wherein X is a molecule of isopropyl alcohol, Y is propylene glycol and n is an integer that ranges from 1,000 to 20,000.

7. Method according to the preceding claim, wherein n is an integer that ranges from 5,000 to 20,000.

## Patentansprüche

1. Verfahren zur Herstellung einer Zusammensetzung, die einen pH zwischen 2 und 5 aufweist, umfassend:
Silberion-Ag⁺-Cluster, die eine durchschnittliche Partikelgröße zwischen 100 nm und 1500 nm aufweisen, wobei die Silberion-Ag⁺-Cluster in Wasser löslich sind und Folgendes umfassen:
∘ Silberionen in Oxidationszustand (I) und
∘ Propylenglykol und/oder Polymere mit polaren Gruppen, ausgewählt aus der Gruppe, bestehend aus Polyvinylpyrrolidon (PVP), Polyacrylaten, Silikagel und Polyolen, und wobei die Hydroxylgruppen des Propylenglykols und/oder die polaren Gruppen der Polymere als Brücke zwischen zwei oder mehr Silberion-Ag⁺ fungieren und durch schwache Wechselwirkungen mit Bindungsenergie ähnlich wie die Bindungsenergie von Wasserstoffbrückenbindungen verbunden sind;
wobei die Zusammensetzung ferner Folgendes umfasst:
∘ Wasserstoffperoxid; und
∘ Isopropylalkohol, Ethylalkohol, Zitronensäure, Hyaluronsäure und/oder Jod;
und dass
die Konzentration der Silberion-Ag⁺-Cluster von 1000 bis 3000 ppm oder von 5000 bis 90.000 ppm ist;
wobei das Verfahren die folgenden Schritte umfasst:
a. Herstellen von AgNQ₃ in wässriger Lösung durch Befüllen eines Tropftrichters mit einer Lösung von AgNQ₃ in doppelt destilliertem Wasser, wobei die Herstellung von AgNQ₃ in wässriger Lösung in einer Dunkelkammer ausgeführt wird;
b. Herstellen von Propylenglykol und/oder anderen Polymeren mit polaren Gruppen, ausgewählt aus der Gruppe, bestehend aus Polyvinylpyrrolidon (PVP), Polyacrylaten, Silikagel und Polyolen, um Ketten von Atomen und Molekülen zu bilden, die den Silberionen-AG⁺-Cluster bilden;
c. Hinzufügen von Isopropylalkohol, Ethylalkohol, Zitronensäure, Hyaluronsäure und/oder Jod, um die Kette zu stabilisieren;
d. Hinzufügen von Wasserstoffperoxid.

2. Verfahren nach Anspruch 1, wobei auf Schritt b) ein folgender Schritt folgt:
b') Erhitzen des Propylenglykols und/oder der anderen Polymere mit polaren Gruppen vor Durchführen von Schritt c), wobei der Erhitzungsschritt b') unterbrochen wird, sobald eine Temperatur von 75 °C (+/- 5 %) bei einer Rührgeschwindigkeit von 100/200 U/min, abhängig von dem Durchmesser des Reaktors erreicht ist.

3. Verfahren nach Anspruch 1, wobei auf den Schritt c) ein Erhitzungsschritt c') auf eine Temperatur von 70 °C (+/- 5 %) folgt, bevor ein Abtropfschritt c") beginnt.

4. Verfahren nach Anspruch 1, wobei der Isopropylalkohol, der Ethylalkohol, die Zitronensäure, die Hyaluronsäure und/oder das Jod in einem Prozentsatz von 2 % bis 20 % hinzugefügt werden.

5. Verfahren nach Anspruch 1, wobei das Wasserstoffperoxid in einem Prozentsatz von 0,1 % bis 1 % hinzugefügt wird.

6. Verfahren nach Anspruch 1, wobei die Silberion-Ag⁺ wie in Formel (1) gezeigt aneinander gebunden sind:
X-Ag⁺-[-Y -Ag⁺ -Y]n -Ag⁺ -X
wobei X ein Molekül von Isopropylalkohol ist, Y Propylenglykol ist und n eine ganze Zahl in einem Bereich von 1000 bis 20.000 ist.

7. Verfahren nach dem vorherigen Anspruch, wobei n eine ganze Zahl in einem Bereich von 5000 bis 20.000 ist.

## Revendications

1. Procédé de préparation d'une composition dont le pH est compris entre 2 et 5, comprenant :
agrégats d'ions argent Ag⁺, dont la taille moyenne des particules est comprise entre 100 nm et 1 500 nm, dans lequel ces agrégats d'ions argent Ag+ étant solubles dans l'eau et comprenant :
∘ des ions argent en état d'oxydation (I) et
∘ du propylène glycol et/ou des polymères comportant des groupes polaires, choisis parmi le groupe constitué de la polyvinylpyrrolidone (PVP), des polyacrylates, du gel de silice et des polyols,
et dans lequel les groupes hydroxyles du propylène glycol et/ou les groupes polaires des polymères font office de pont entre deux ou plusieurs ions argent Ag⁺ et sont liés entre eux par des interactions faibles dont l'énergie de liaison est similaire à celle des liaisons hydrogène ;
dans lequel la composition comprend en outre :
∘ du peroxyde d'hydrogène ; et
∘ de l'alcool isopropylique, de l'alcool éthylique, de l'acide citrique, de l'acide hyaluronique et/ou de l'iode ;
**et en ce que**
la concentration des agrégats d'ions argent Ag+ est comprise entre 1 000 et 3 000 ppm ou entre 5 000 et 90 000 ppm ;
dans lequel le procédé comprend les étapes consistant à :
a. préparer de l'AgNO₃ en solution aqueuse en remplissant un entonnoir à compte-gouttes d'une solution d'AgNO₃ dans de l'eau bidistillée, la préparation de l'AgNO₃ en solution aqueuse étant effectuée dans une chambre noire ;
b. préparer du propylène glycol et/ou d'autres polymères comportant des groupes polaires, choisis parmi le groupe constitué de la polyvinylpyrrolidone (PVP), des polyacrylates, du gel de silice et des polyols, afin de former des chaînes d'atomes et de molécules qui constituent le cluster d'ions argent Ag⁺ ;
c. ajouter de l'alcool isopropylique, de l'alcool éthylique, de l'acide citrique, de l'acide hyaluronique et/ou de l'iode afin de stabiliser la chaîne ;
d. ajouter du péroxyde d'hydrogène ;

2. Procédé selon la revendication 1, dans lequel l'étape b) est suivie d'une étape consistant à : b') chauffer le propylène glycol et/ou les autres polymères comportant des groupes polaires avant de passer à l'étape c), ladite étape de chauffage b') étant interrompue lorsqu'une température de 75 °C (+/- 5 %) est atteinte, sous agitation à une vitesse comprise entre 100 et 200 tr/min en fonction du diamètre du réacteur.

3. Procédé selon la revendication 1, dans lequel ladite étape c) est suivie d'une étape de chauffage c') à une température de 70 °C (+/- 5 %) avant de lancer une étape d'égouttage c").

4. Procédé selon la revendication 1, dans lequel ledit alcool isopropylique, ledit alcool éthylique, ledit acide citrique, ledit acide hyaluronique et/ou ledit iode sont ajoutés à une concentration comprise entre 2 % et 20 %.

5. Procédé selon la revendication 1, dans lequel ledit peroxyde d'hydrogène est ajouté à raison de 0,1 % à 1 %.

6. Procédé selon la revendication 1, dans lequel les ions argent Ag⁺ sont liés entre eux comme indiqué dans la formule (1) :
X-Ag⁺-[-Y-Ag⁺-Y]ₙ-Ag⁺-X (1)
dans laquelle X représente une molécule d'alcool isopropylique, Y représente le propylène glycol et n est un nombre entier compris entre 1 000 et 20 000.

7. Procédé selon la revendication précédente, dans lequel n est un nombre entier compris entre 5 000 et 20 000.
